# EUROPÄISCHE PATENTSCHRIFT

(11) **EP 1 003 647 B1**
(45) Veröffentlichungstag und Bekanntmachung des Hinweises auf die Patenterteilung: **16.01.2002**
(21) Anmeldenummer: 98945118.2
(22) Anmeldetag: 30.07.1998
(51) Int. Cl.: B60C 23/04

(54) **VERFAHREN ZUM ZUORDNEN VON KENNUNGEN IN SIGNALEN VON SENDERN IN EINEM REIFENDRUCKÜBERWACHUNGSSYSTEM ZU DEN RÄDERN, AN WELCHEN SICH DIE SENDER BEFINDEN**
METHOD FOR ASSIGNING IDENTIFIERS, PRESENT IN SIGNALS EMITTED BY TRANSMITTERS IN A TIRE PRESSURE MONITORING SYSTEM, TO THE WHEELS WHERE THE TRANSMITTERS ARE LOCATED
PROCEDE POUR L'ATTRIBUTION DE CARACTERISTIQUES DANS DES SIGNAUX D'EMETTEURS DANS UN SYSTEME DE CONTROLE DE PRESSION DES PNEUS, PAR RAPPORT AUX ROUES SUR LESQUELLES SE TROUVENT LES EMETTEURS

(30) Priorität: 19.08.1997 DE 19735686
(43) Veröffentlichungstag der Anmeldung: 31.05.2000
(73) Patentinhaber: Beru AG, 71636 Ludwigsburg (DE)
(72) Erfinder: NORMANN, Norbert, D-75223 Niefern-Öschelbronn (DE); MICHAL, Roland, A-6890 Lustenau (AT)
(74) Vertreter: Twelmeier, Ulrich, Dipl.Phys.
(86) Internationale Anmeldenummer: EP9804761
(87) Internationale Veröffentlichungsnummer: WO9908887

(56) Entgegenhaltungen:
- EP-A- 0 760 299
- DE-A- 19 608 478
- DE-A- 19 608 479

## Beschreibung

Die Erfindung geht aus von einem Verfahren zum Zuordnen von Kennungen in Signalen von Sendern in einem Reifendrucküberwachungssystem zu den Rädern, an welchen sich die Sender befinden, mit den im Oberbegriff des Anspruchs 1 angegebenen Merkmalen. Ein solches Verfahren ist aus der DE-196 08 478 A1 bekannt. Das bekannte Reifendrucküberwachungssystem hat an jedem Rad eines Fahrzeugs einen Druckmeßfühler, eine mit dem Druckmeßfühler verbundene elektronische Auswerteschaltung, einen Sender, eine Sendeantenne und eine Batterie, welche die am Rad vorgesehene Elektronik (nachfolgend auch als Radelektronik bezeichnet) mit Strom versorgt. Den Rädern benachbart sind an der Karosserie des Fahrzeuges Empfangsantennen vorgesehen, welche über Kabel an eine zentrale Empfangs- und Auswerteschaltung (nachfolgend auch als zentrale Auswerteelektronik bezeichnet) angeschlossen sind.

Ein Problem, das sich bei solchen Reifendrucküberwachungssystemen stellt, ist die eindeutige Zuordnung der Sender zu der Position ihres Rades am Fahrzeug. Zu diesem Zweck erzeugen die Sender ein in vier Abschnitte unterteiltes Signal, bestehend aus Präambel, Identifikationssignal, Meßsignal und Postambel. Anhand des Identifikationssignals (Kennung) kann die zentrale Auswerteelektronik erkennen, wo sich das sendende Rad am Fahrzeug befindet. Voraussetzung dafür ist jedoch, daß die Kennung und die Radposition einander zuvor eindeutig zugeordnet wurden und diese Zuordnung in der zentralen Auswerteelektronik abgespeichert wurde. Die DE 196 08 478 A1 offenbart eine Möglichkeit, wie diese Zuordnung nach der erstmaligen Montage von Rädern am Fahrzeug oder nach einem Radwechsel automatisch aus den von den Radelektroniken gesandten Signalen bestimmt werden kann. Dazu findet eine statistische Auswertung der Signalintensitäten statt: Zwar empfängt jede Empfangsantenne Signale von allen sendenden Rädern des Fahrzeuges, doch geht man von der Annahme aus, daß die Signale von dem der jeweiligen Empfangsantenne nächstliegenden Rad im statistischen Mittel mit der stärksten Intensität empfangen werden.

Ein ähnliches Zuordnungsverfahren ist aus der DE 196 08 479 A1 bekannt. Die bekannten Zuordnungsverfahren haben den Nachteil, daß sie erhebliche Kosten des Reifendrucküberwachungssystems verursachen, weil für jedes Rad eine gesonderte Empfangsantenne vorgesehen ist, welche mit einem Antennenkabel an die zentrale Empfangs- und Auswerteschaltung im Fahrzeug anzuschließen ist.

Aus der EP 0 760 299 A1 ist bereits das Erfassen der Drehrichtung eines Rades durch Tangential- und / oder Radialbeschleunigungsaufnehmen bekannt. Aus der Radialbeschleunigung kann die Drehrichtung aber nicht ermittelt werden. Aus der Tangentialbeschleunigung (Bahnbeschleunigung) allein kann auf die Drehrichtung auch noch nicht geschlossen werden. Eine zuverlässige Unterscheidung zwischen rechten und linken Rädern erlaubt die EP 0 760 299 A1 nicht.

Der vorliegenden Erfindung liegt die **Aufgabe** zugrunde, eine Möglichkeit aufzuzeigen, die automatische Zuordnung der von den Radelektroniken ausgesandten Kennungen zu bestimmten Radpositionen mit geringerem Aufwand zu erreichen.

Diese Aufgabe wird gelöst durch ein Verfahren mit den im Anspruch 1 angegebenen Merkmalen. Vorteilhafte Weiterbildungen der Erfindung sind Gegenstand der abhängigen Ansprüche.

Die erfindungsgemäße Lösung sieht vor, die am jeweiligen Rad vorhandene Radelektronik dahingehend zu ergänzen, daß sie nicht nur den Reifendruck mißt und an die zentrale Empfangs- und Auswertungselektronik übermittelt, sondern zusätzlich noch in einem Bahnbeschleunigungssignal enthaltene Informationen über den Bewegungszustand des Rades übermittelt, aus welchem eine Information über die Position des betreffenden Rades am Fahrzeug gewonnen wird. Nützliche Informationen über den Bewegungszustand des Rades werden erfindungsgemäß aus der am Rad auftretenden Bahnbeschleunigung und vorzugsweise aus weiteren Beschleunigungen gewonnen. Die von einem mit der Radelektronik verbundenen Beschleunigungssensor gelieferten Beschleunigungssignale werden entweder in einer in der Radelektronik vorgesehenen Auswerteschaltung ausgewertet und das Ergebnis der Auswertung wird an die zentrale Auswerteelektronik gesendet, oder die Beschleunigungssignale werden von der Radelektronik in das regelmäßig auszusendende Signal eingefügt, an die zentrale Auswerteelektronik gesendet und darin ausgewertet. Das Vorzeichen der Bahnbeschleunigung wird aber bereits in der am Rad vorgesehenen Auswerteschaltung bestimmt.

Miniaturisierte Beschleunigungssensoren auf Halbleiterbasis, die mit verhältnismäßig geringem Aufwand in die ohnehin benötigte Radelektronik integriert werden können, sind verfügbar. Der damit verbundene zusätzliche Aufwand in der Radelektronik ist wesentlich geringer als der Aufwand, der durch den Fortfall von Empfangsantennen und ihrer Verkabelung vermieden wird.

Auf folgende Weisen lassen sich Informationen über die Radposition aus Beschleunigungssignalen ableiten, die am Rad gewonnen wurden:
1. Durch Drehen des Rades tritt an diesem eine Zentrifugalbeschleunigung auf. Nur an mitgeführten Reserverädern tritt auch bei rollendem Fahrzeug keine Zentrifugalbeschleunigung auf. Zentrifugalbeschleunigungssignale, welche bei rollendem Fahrzeug empfangen werden, aber die Zentrifugalbeschleunigung z = O signalisieren, werden deshalb einem mitgeführten Reserverad zugeordnet.
2. Die Stärke der am Rad auftretenden Zentrifugalbeschleunigung ist abhängig von der Drehzahl des Rades. Wird die Stärke der Zentrifugalbeschleunigung in der zentralen Empfangs- und Auswerteelektronik über eine vorgegebene Zeitspanne integriert, so ist die Größe des Integralwertes ein Maß für den Weg, den das Rad in dieser Zeitspanne zurückgelegt hat. Da die gelenkten Vorderräder bei Kurvenfahrt einen größeren Weg zurücklegen als die ungelenkten Hinterräder eines Fahrzeuges, wird der Integralwert für ein gelenktes Vorderrad größer sein als für ein nicht gelenktes Hinterrad. Die Kennungen, die in den Signalen enthalten sind, welche zu den größten Integralwerten führen, können deshalb den gelenkten Vorderrädern des Fahrzeuges zugeordnet werden.
3. Bei übereinstimmender Einbaulage des Beschleunigungssensors am Rad liefern ein Beschleunigungssensor an einem Rad auf der rechten Seite des Fahrzeuges und ein Beschleunigungssensor an einem Rad auf der linken Seite des Fahrzeuges bei einer Fahrzeugbeschleunigung Bahn-Beschleunigungssignale mit entgegengesetzten Vorzeichen. Als Bahnbeschleunigung wird hier die beim Beschleunigen (oder Bremsen) in Umfangsrichtung des Rades auftretende Beschleunigungskomponente bezeichnet. Das Vorzeichen des Bahnbeschleunigungssignals erlaubt eine Unterscheidung zwischen rechten und linken Rädern, wobei Vorzeichen vorzugsweise bereits in der Radelektronik bestimmt und der zentralen Empfangs- und Auswerteschaltung übermittelt wird. Die Unterscheidung zwischen rechten und linken Rädern wird, in der Beschleunigungsphase nach einem Start des Fahrzeugs vorgenommen.
   Hat man aus der Zentrifugalbeschleunigung die Kennung des Reserverades ermittelt und aus der Bahnbeschleunigung ermittelt, welche Räder auf der rechten Seite und welche auf der linken Seite des Fahrzeuges angeordnet sind, dann könnte man die restliche Unterscheidung zwischen vorderen Rädern und hinteren Rädern statt durch Auswertung von Integralwerten der Zentrifugalbeschleunigung auch durch eine gegenüber dem Stand der Technik verringerte Anzahl von Antennen auf der Empfangsseite bestimmen, nämlich dadurch, daß jeder Achse des Fahrzeuges lediglich eine eigene Empfangsantenne zugeordnet wird. Die Unterscheidung zwischen den einzelnen Achsen kann dann durch statistische Auswertung der Signalintensitäten auf dieselbe Weise erfolgen, wie sie in der DE 196 08 478 A1 oder in der DE 196 08 479 A1 offenbart ist, wobei man jedoch nicht mehr für jedes Rad eine eigene Empfangsantenne am Fahrzeug benötigt, sondern für die auf einer gemeinsamen Achse angeordneten Räder nur noch eine gemeinsame Empfangsantenne.
4. Zur Unterscheidung von gelenkten Vorderrädern und nicht gelenkten Hinterrädern des Fahrzeuges kann nach einer anderen Weiterbildung der Erfindung auch das Auftreten einer Coriolisbeschleunigung am gelenkten Rad beobachtet und ausgewertet werden. Eine Coriolisbeschleunigung tritt an den ungelenkten Rädern nicht auf, wohl aber an den gelenkten Rädern, wenn Lenkbewegungen ausgeführt werden. Signalisiert ein Rad das Auftreten einer Coriolisbeschleunigung, dann ist klar, daß es sich um eines der gelenkten Vorderräder handelt.

Die Zentrifugalbeschleunigung wirkt senkrecht zur Bahnbeschleunigung. Die Coriolisbeschleunigung wiederum wirkt senkrecht zur Zentrifugalbeschleunigung und zur Bahnbeschleunigung.

Ein Beschleunigungssensor, der zwischen Beschleunigungen in Richtung von drei unterschiedlichen Koordinatenachsen unterscheiden kann oder eine Anordnung von drei Beschleunigungssensoren, welche in drei verschiedenen Koordinatenachsen empfindlich sind, eignet sich mit Vorteil für die vorliegende Erfindung. Die Erfindung ist aber nicht nur mit einem dreiachsigen Beschleunigungssensor durchführbar, sondern, wie vorstehend erläutert, auch mit Hilfe eines zweiachsigen Beschleunigungssensors, ja sogar mit einem nur in einer Achse empfindlichen Beschleunigungssensor.

## Patentansprüche

1. Verfahren zum Zuordnen von Kennungen, die in Signalen enthalten sind, welche von Sendern in einem Reifendrucküberwachungssystem ausgesandt werden, das aus je einem Druckmeßfühler, einem Sender und einer Sendeantenne an jedem einer Anzahl von Rädern eines Fahrzeuges, aus einer oder mehreren Empfangsantennen an der Karosserie des Fahrzeuges und aus einer an diese über Kabel angeschlossenen Empfangs- und Auswerteelektronik besteht,
zu den Positionen der Räder, an welchen sich die Sender befinden, indem die Signale, welche die Kennung enthalten, von der einen oder den mehreren Empfangsantennen aufgefangen, an die Empfangs- und Auswerteelektronik weitergeleitet und darin hinsichtlich ihrer Kennung ausgewertet werden,
**dadurch gekennzeichnet, daß** an den überwachten Rädern zusätzlich zum Luftdruck im Reifen eine sich aus dem Bewegungszustand des jeweiligen Rades ergebende Bahnbeschleunigung (b) gemessen, ein daraus abgeleitetes Bahnbeschleunigungssignal mittels des jeweiligen Senders der Empfangs- und Auswerteelektronik signalisiert
und auf eine im Bahnbeschleunigungssignal enthaltene Information über die Lage jenes Rades ausgewertet wird, von welchem das Bahnbeschleunigungssignal ausgeht,
daß zur Unterscheidung von Rädern auf der rechten Seite des Fahrzeugs von Rädern auf der linken Seite des Fahrzeugs das Vorzeichen der am Rad auftretenden Bahnbeschleunigung (b) bereits in einer am Rad vorgesehenen Auswerteschaltung in der Beschleunigungsphase nach einem Start des Fahrzeuges bestimmt wird.

2. Verfahren nach Anspruch 1, **dadurch gekennzeichnet, daß** zusätzlich die Zentrifugalbeschleunigung (z) gemessen und der Empfangs- und Auswerteelektronik signalisiert wird, und daß ein bei rollendem Fahrzeug empfangenes Zentrifugalbeschleunigungssignal, welches eine Zentrifugalbeschleunigung z = O signalisiert, einem mitgeführten Reserverad zugeordnet wird.

3. Verfahren nach Anspruch 1, **dadurch gekennzeichnet, daß** zusätzlich die Zentrifugalbeschleunigung (z) gemessen und der Empfangs- und Auswerteelektronik signalisiert wird, und daß zur Unterscheidung von gelenkten Rädern und nicht gelenkten Rädern des Fahrzeuges die Zentrifugalbeschleunigungssignale, welche die Stärke der gemessenen Zentrifugalbeschleunigung angeben, über eine vorgegebene Zeitspanne integriert werden, wobei den gelenkten Rädern jene Zentrifugalbeschleunigungssignale zugeordnet werden, welche die größten Integralwerte liefern.

4. Verfahren nach Anspruch 1, **dadurch gekennzeichnet, daß** zur Unterscheidung von gelenkten Rädern und nicht gelenkten Rädern des Fahrzeuges während Lenkbewegungen das Auftreten einer Coriolisbeschleunigung ermittelt und signalisiert wird.

5. Verfahren nach Anspruch 1, **dadurch gekennzeichnet, daß** den auf einer gemeinsamen Achse des Fahrzeuges angeordneten Rädern jeweils eine gemeinsame Empfangsantenne zugeordnet wird.

6. Verfahren nach Anspruch 3 oder 4, **dadurch gekennzeichnet, daß** für die Gesamtheit der sendenden Räder des Fahrzeuges lediglich eine einzige Antenne benutzt wird.

## Claims

1. Method for allocating identification signals, which are contained in signals which are emitted by transmitters in a tire pressure monitoring system, wherein the tire pressure monitoring system comprises in each case a pressure sensor, a transmitter and a transmitter antenna at each one of a plurality of wheels of a vehicle, of one or several receiver antennas at the body of the vehicle and of a receiving and evaluation electronics connected through cables to the receiver antennas,
to the positions of the wheels, at which wheels the transmitters are disposed, by capturing the signals, which contain the identification signal, by said one or several receiver antennas, transferring the signals to the receiver and evaluation electronics, and evaluating the signals relative to the identification signal in the receiving and evaluation electronics,
**characterized in that** a translation acceleration (b) resulting from the state of motions of the respective wheel is measured at the monitored wheels in addition to the air pressure in the tire, a translation acceleration signal derived therefrom is signalled by way of the respective transmitter to the receiving and evaluation electronics
and an information contained in the translation acceleration signal relative to the position of that the wheel is evaluated, from which wheel the translation acceleration signal is derived,
and that for distinguishing of wheels on the right hand side of the vehicle from wheels on the left hand side of the vehicle the sign of a translation acceleration b occurring at the respective wheel is determined in an evaluation circuit, which is provided at the wheel, already in the acceleration phase after starting the vehicle.

2. Method according to claim 1, **characterized in that** additionally the centrifugal acceleration (z) is sensed and signalled to the receiver and evaluation electronics and that a centrifugal acceleration signal received in case of a rolling vehicle, which signal signalizes a centrifugal acceleration z = 0, is allocated to a carried on spare wheel.

3. Method according to claim 1, **characterized in that** additionally the centrifugal acceleration (z) is sensed and signalled to the receiver and evaluation electronics and that for distinguishing of steered wheels and non-steered wheels of the vehicle the centrifugal acceleration signals indicating the strength of the measured centrifugal acceleration are integrated over a predetermined time period, wherein those signals are allocated to the steered wheels, which signals deliver the largest integral values.

4. Method according to claim 1, **characterized in that** the occurrence of a Coriolis acceleration is determined and signalled during steering motions for distinguishing of steered wheels and non-steered wheels of the vehicle.

5. Method according to claim 1, **characterized in that** a common receiver antenna is associated to the wheels disposed on a common axle of the vehicle.

6. Method according to claim 3 or 4, **characterized in that** only a single antenna is employed for the totality of the emitting wheels of the vehicle.

## Revendications

1. Procédé pour attribuer des identifications, qui sont contenues dans des signaux qui sont envoyés par des émetteurs dans un système de surveillance de la pression des bandages pneumatiques qui est constitué respectivement par un palpeur de pression, par un émetteur et par une antenne d'émission sur chacune des roues d'un véhicule, par une ou plusieurs antennes de réception sur la carrosserie des véhicules et par une électronique de réception et d'évaluation raccordée par câble auxdites antennes, aux positions des roues sur lesquelles se trouvent les émetteurs, en acheminant les signaux, qui contiennent l'identification, captés par une ou plusieurs antennes de réception, à l'électronique de réception et d'évaluation et en les y évaluant en ce qui concerne leur identification, **caractérisé en ce que**, sur les roues soumises à une surveillance, en plus de la pression d'air régnant dans le bandage pneumatique, on mesure une accélération en orbite (b) que l'on obtient à partir de l'état de mouvement de la roue respective, on obtient un signal d'accélération en orbite qui en dérive à l'aide de l'émetteur respectif de l'électronique de réception et d'évaluation et on procède à une évaluation concernant des informations contenues dans le signal d'accélération en orbite en ce qui concerne la position de la roue dont provient le signal d'accélération en orbite, et
**en ce que**, pour opérer une différenciation entre les roues du côté droit du véhicule et les roues du côté gauche du véhicule, le signe de l'accélération en orbite (b) apparaissant sur la roue est déjà déterminé dans un circuit d'évaluation prévu sur la roue dans la phase d'accélération après le départ du véhicule.

2. Procédé selon la revendication 1, **caractérisé en ce qu'**on mesure en outre l'accélération centrifuge (z) et on envoie la mesure sous forme d'un signal à l'électronique de réception et d'évaluation et **en ce qu'**on attribue un signal d'accélération centrifuge reçu lorsqu'un véhicule est en train de rouler, qui donne une accélération centrifuge z = 0, à une roue de rechange emportée.

3. Procédé selon la revendication 1, **caractérisé en ce qu'**on mesure en outre la vitesse centrifuge (z) et on envoie la mesure sous forme d'un signal à l'électronique de réception et d'évaluation et **en ce que**, pour opérer une distinction entre des roues dirigées et des roues non dirigées du véhicule, on intègre pendant un laps de temps prédéfini les signaux d'accélération centrifuge qui indiquent la force de l'accélération centrifuge mesurée, et on attribue de cette manière aux roues dirigées les signaux d'accélération centrifuge fournissant les valeurs d'intégrale les plus élevées.

4. Procédé selon la revendication 1, **caractérisé en ce que**, pour opérer une distinction entre des roues dirigées et des roues non dirigées du véhicule lors de mouvements de direction, on détermine et on transforme en signal l'apparition d'une accélération de Coriolis.

5. Procédé selon la revendication 1, **caractérisé en ce qu'**on attribue aux roues montées sur un essieu commun du véhicule respectivement une antenne de réception commune.

6. Procédé selon la revendication 3 ou 4, **caractérisé en ce qu'**on n'utilise, pour l'ensemble des roues émettrices du véhicule, qu'une seule antenne.
